# EUROPEAN PATENT APPLICATION

(11) **EP 4 183 483 A1**
(43) Date of publication of application: **24.05.2023**
(21) Application number: 21306626.9
(22) Date of filing: 22.11.2021
(51) Int. Cl.: B01J 21/08, B01D 53/86, B01D 53/94, B01J 23/30, B01J 37/02

(54) **METAL SUPPORTED OXIDE(S) AS NH3-SCR CATALYSTS AND SYNTHESIS PROCESSES WITH MODIFIED SUPPORTS**

(71) Applicant: Toyota Jidosha Kabushiki Kaisha, Toyota-shi, Aichi-ken 471-8571 (JP); Centre National de la Recherche Scientifique, 75016 Paris (FR); Université Claude Bernard Lyon 1, 69622 Villeurbanne (FR); École Supérieure de Chimie Physique Électronique de Lyon, Domaine Scientifique de la Doua, 69622 Villeurbanne (FR)
(72) Inventor: NGUYEN, Phuc Hai, 1140 BRUSSELS (BE); LARABI, Cherif, 69100 VILLEURBANNE (FR); SZETO, Kai Chung, 69100 VILLEURBANNE (FR); TAOUFIK, Mostafa, 69100 VILLEURBANNE (FR)
(74) Representative: Cabinet Beau de Loménie

(57) **Abstract**

The present invention relates to a process for preparing a catalyst material with a support material of ceria (CeO₂) or a combination of ceria and zirconia (ZrO₂), using an auxiliary support precursor compound to provide a metal or metalloid element M1 selected from the group consisting of: silicon (Si), the group IVB elements Ti, Zr and Hf, the group IIIA elements Al, Ga, In, zinc (Zn) and nickel (Ni), and using a precursor containing a metal atom M2 wherein M2 is selected from the group consisting of: W, Mo, Cr, Ta, Nb, V and Cu.

The present invention further relates to a catalyst material as may be obtained by the process, and the use of said catalyst material as an ammonia selective catalytic reduction (NH₃-SCR) catalyst for nitrogen oxides (NOx) reduction.

## Description

### Field of the Invention

The present invention relates to the synthesis of ammonia selective catalytic reduction (NH₃-SCR) catalysts for nitrogen oxides (NOx) reduction.

### Background Art

Toxic NOx gases (NO, NO₂, N₂O) included in exhaust gases from fossil-fuel-powered vehicles or stationary sources such as power plants are required to be converted to N₂ before being released to the environment. This is normally done by using different types of NOx reduction catalysts such as three-way catalysts (TWC), NOx storage reduction (NSR), or selective catalytic reduction (SCR) using ammonia as external reducing agent (NH₃-SCR).

Metal oxides such as V₂O₅ are known to be good NH₃-SCR catalysts. It has been suggested that the catalytic activity is achieved by the complementary features of acidity and reducibility of the surface species. Briefly, NH₃ is adsorbed on a Brønsted acid site (V⁵⁺-OH) followed by N-H activation through the adjacent V=O surface groups through a redox cycle (V⁵⁺=O/V⁴⁺-OH). The resulting surface complex reacts with gaseous or weakly adsorbed NO through Langmuir-Hinshelwood and Eley-Rideal mechanisms, respectively, to form NH₂NO intermediate species which undergo decomposition into N₂ and H₂O. An alternate mechanism (amide-nitrosamide) involving the adsorption of NH₃ over Lewis acid sites has also been proposed. Furthermore, under realistic conditions, particularly when a peroxidation catalytic convertor is placed upstream of the SCR catalytic convertor, this gives rise to formation of nitrogen dioxide which favors the SCR reaction known as fast-SCR. Indeed NO₂ allows fast re-oxidation of the reduced species. However, the optimal NO₂/NO ratio is one, and the presence of excess NO₂ is also reduced through slower reaction leading to a lower total SCR reaction rate. Metal oxide catalysts such as V₂O₅ are developed mostly by synthesis routes such as impregnation, which normally produce nanoparticles of metal dispersed on support. The problem of such catalysts is the low performance, such as low NOx conversion and/or low N₂ selectivity.

Prior art catalysts have often used Cu, Fe, which are well recognized as good active sites for NH₃-SCR when incorporated into zeolite materials. As regards support materials, prior art has often used SiO₂, which has high specific surface area, and may be expected to improve SCR performance by increasing the quantity of active sites.

US 9,283,548 B2 discloses catalysts of the type: MA / CeO₂ (M = Fe, Cu; A = K, Na), the synthesis route being impregnation, with chelating agents such as EDTA, DTPA being used.

J. Phys. Chem. B 2006, 110, 9593 - 9600 [Tian 2006] discloses catalysts of the type: VOx / AO₂ (A = Ce, Si, Z), the synthesis route being impregnation. Applications include propane oxidative dehydrogenation (ODH). Dispersion and physisorption of the vanadium oxo-isopropoxide is achieved, rather than chemisorption.

J. Phys. Chem. B 1999, 103, 6015 - 6024 [Burcham 1999] discloses catalysts of the type: Nb₂O₅ / SiO₂, Al₂O₃, ZrO₂, TiO₂, the synthesis route being impregnation. The reference discusses surface species of isolated Nb, characterized by vibrational spectroscopy. The preparation is carried out in water, and the metal is deposited on the surface, rather than being grafted by protonolysis.

J. Phys. Chem. C 2011, 115, 25368-25378 [Wu 2011] discloses catalysts of the type: VOx / CeO₂, SiO₂, ZrO₂, the synthesis route being impregnation. Iso-propanol is used as a solvent, not leading to grafting of the precursor on the surface, but instead only dispersion and physisorption of the vanadium oxo-isopropoxide.

Appl. Catal. B 62, 2006, 369 [Chmielarz 2006] describes catalysts of the type: Fe or Cu/SiO₂ (3 different forms). It is widely known that Cu and Fe show good NH₃-SCR performance when zeolites are used (ion-exchange synthesis). The catalyst materials were used for deNOx by NH₃-SCR. Synthesis was carried out by molecular designed dispersion (MDD) using precursors Fe(acac)₃, Cu(acac) (acac = acetylacetonate).

Science 2007, 317, 1056-1060 [Avenier 2007] describes cleavage of dinitrogen on isolated silica surface-supported tantalum(III) and tantalum(V) hydride centers [(≡Si-O)₂Ta^{III}-H] and [(≡Si-O)₂Ta^{v}-H₃].

EP 2 985 077 A1 describes SiO₂-supported molybdenum or tungsten complexes, such as trialkyltungsten or molybdenum oxo complexes, their preparation and use in olefin metathesis.

### Summary of the Invention

In order to address the problems associated with prior art products and processes in the field of ammonia selective catalytic reduction (NH₃-SCR) catalysts for nitrogen oxides (NOx) reduction, the processes and products of the present invention have been developed.

The Surface Organometallic Chemistry (SOMC) approach is capable of modifying the surface of support materials by grafting organometallic precursors, i.e. forming chemical bonds between precursors and surface hydroxyl groups, and thus preserving the local structure of the grafted material to minimize the formation of diversified species on the surface of support materials that are normally created through conventional synthesis methods. This methodology can be used to synthesize metal oxide catalysts supported with different metals. A typical SOMC procedure to synthesize materials consists of 3 steps as follows:
- Step 1: Preparation, example:
   ∘ Support materials:
      ▪ calcination
      ▪ hydration
      ▪ hydroxyl level adjustement to generate controlled concentrations of hydroxyl groups
   ∘ Metal precursors:
      ▪ Synthesis (for those that are not readily available)
- Step 2: Grafting
   ∘ Allow metal precursors to react with surface hydroxyl groups of the support material in a solution, for example toluene, typically at room temperature (∼ 25 °C)
   ∘ Washing and drying
- Step 3: Activation
   ∘ Remove remaining organic ligands, typically by calcination at around 500 °C or higher in 16h under air flow

The present invention discloses the development of new oxide NH₃-SCR catalysts with improved NOx reduction performance by using new SOMC procedures.

Thus, in a first aspect, the present invention relates to a process for preparing a catalyst material, comprising the steps of:
(a) providing a support material having surface hydroxyl (OH) groups, wherein the support material is ceria (CeO₂) or a combination of ceria and zirconia (ZrO₂);
(b1) reacting the support material having surface hydroxyl (OH) groups of step (a) with at least one auxiliary support precursor compound containing a metal or metalloid element M1 selected from the group consisting of: silicon (Si), the group IVB elements Ti, Zr and Hf, the group IIIA elements Al, Ga, In, zinc (Zn) and nickel (Ni);
(b2) removing organic parts of the auxiliary support precursor compound grafted in step (b1) by calcination to provide a calcined support material bearing metal element M1;
(b3) rehydrating the calcined support material obtained in step (b2);
(b4) adjusting the surface hydroxyl (OH) group level of the rehydrated calcined support material obtained in step (b3);
(c) reacting the support material having surface hydroxyl (OH) groups of step (b4) with at least one precursor containing a metal atom M2 wherein M2 is selected from the group consisting of: W, Mo, Cr, Ta, Nb, V and Cu;
(d) calcining the product obtained in step (c) in order to provide a catalyst material containing cerium and optionally zirconium, and containing at least one metal or metalloid element M1, and at least one metal element M2.

In a second aspect, the present invention relates to a catalyst material as may be obtained by the process set out above.

In a third aspect, the present invention relates to the use of the catalyst material set out above as an ammonia selective catalytic reduction (NH₃-SCR) catalyst for nitrogen oxides (NOx) reduction.

### Brief description of the Figures

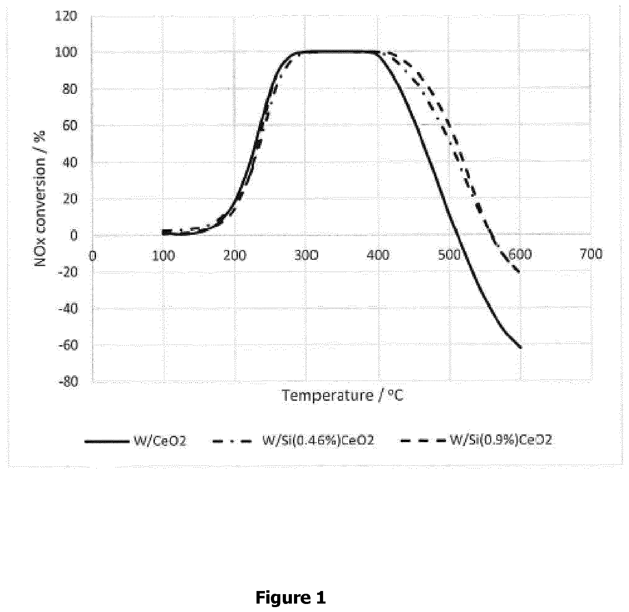

Figure 1 shows the comparison of NH₃-SCR catalysis performance of, on the one hand, a comparative example containing tungsten on ceria (W/CeO₂) and on the other hand, examples containing tungsten on ceria, the ceria being doped with two different amounts of silicon (Si). The silicon doping improves catalytic performance at high temperatures.

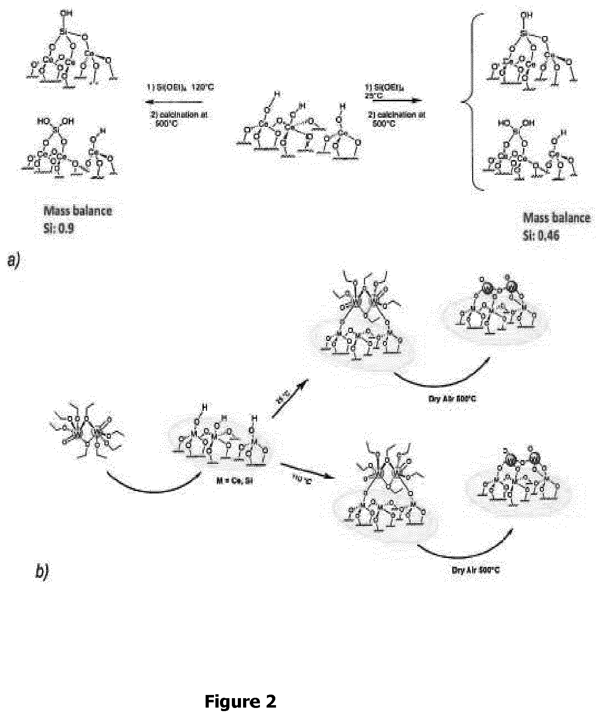

Figure 2 shows a schematic representation of Surface Organometallic Chemistry (SOMC) procedures for preparation of NH₃-SCR catalysts with modified support materials, part a) showing the modification of the support materials, and part b) showing the grafting of metal precursors on the thus modified support materials.

### Detailed description of the invention

Among advantageous features of the present invention are:
- a process of grafting (chemical reactions between precursors and surface) rather than impregnating;
- grafted metals with atomic scale dispersion may be obtained rather than nano-particles;
- a support which is thermally pre-treated (dehydroxylation), resulting in a desired anchoring point (OH), and grafting yields well-dispersed surface species, thereby preventing sintering of the active metal center.

In the present invention, new NH₃-SCR catalysts with suitable combinations of a metal selected from transition metal groups and a support material selected from CeO₂ or CeO₂-ZrO₂ are disclosed. These catalysts are prepared by new SOMC procedures using various organometallic metal precursors.

Conventional oxide catalysts normally consist of large metal particles supported on oxides or mixed oxides. The active sites are ill-defined. The catalysts disclosed in the present invention may provide nearly 100% atomic scale dispersion of metal. Such highly dispersed metal sites do not only simply give higher density of active sites but also change the catalytic mechanism of NH₃-SCR, in which NH₃ adsorbed on metal sites can actively react with NOx adsorbed on surface of support. In other words, in the new catalysts interaction between the metal and the support material is promoted, thus enhancing the catalytic performance.

Catalysts reported in the prior art have a common problem of low NOx conversion in NH₃-SCR reactions, for example in particular temperature ranges such as at high temperature. It has surprisingly been observed, and this is the basis of the present invention, that doping of the ceria-based support material with other metal or metalloid elements (such as Si), before addition of the transition metal element, notably from groups 5 and 6 of the Periodic Table, can improve catalytic performance, in particular at high temperatures. Enhanced catalytic performance is particularly noted and of interest at temperatures of at least 400°C and at most 550°C.

Appropriate support materials, in the form of ceria (CeO₂) or ceria-zirconia (ZrO₂), can be obtained from commercial suppliers. For example, ceria can be obtained from suppliers such as SOLVAY and typically has a specific surface area of about 250 m²/g. Preferred support materials in the present invention are ceria (CeO₂) or ceria-zirconia (CeO₂ - ZrO₂) supports. Concerning mixed ceria-zirconia (CeO₂ - ZrO₂) supports, the amount of ZrO₂ can be in the range 20 to 80 wt%, preferably between 30 to 60 wt%. A higher content of ZrO₂ may in practice decrease the concentration of OH groups. CeO₂ and CeO₂-ZrO₂ are not known in the prior art as good support materials for SCR catalysts - these materials normally have lower specific surface area (SSA) than SiO₂.

In an advantageous embodiment to provide a certain controlled concentration of OH groups on the support material, in order to provide the material in step (a), for the process of the invention, hydration of the oxide support material (as received in a typical commercial sample) may be carried out in a first instance using moisture, followed by adjustment of hydroxyl (OH) levels through heating under reduced pressure. The concentration of OH groups is notably influenced by the temperature of the treatment. In a generally appropriate process for treating a ceria (CeO₂) support material, a pressure of about 10⁻⁵ mbar, at a temperature of 200 °C for typically 16 h constitute advantageous treatment conditions. The concentration of OH groups on the support material can for example be determined by chemical titration through reaction with Al(ⁱBu)₃ - the latter reacts quantitatively with surface hydroxyl groups releasing one equivalent of isobutane per OH.

In preferred processes according to the present invention, the support material provided in step (a) contains at least 0.3 mmol and at most 2.0 mmol OH groups/g of the support material, preferably at least 0.5 mmol and at most 1.3 mmol OH groups/g of the support material.

In the present invention, auxiliary support precursor compounds used for the preparation of the catalysts (in step (b1)) are based on Si, group IV (Ti, Zr, Hf), group IIIA (Al, Ga, In), Zn or Ni. Particularly preferred auxiliary support precursor compounds are based on silicon (Si). Alkoxides of these metal/metalloid elements are preferred auxiliary support precursor compounds. Compounds with metal-carbon bonds may also be used.

Preferable precursors for the step (b1) are:
- Si(OR)₄, wherein R = alkyl or aryl, notably where R= Et, ⁱPr, n-Bu, ^{t}Bu;
- For group IV (Zr, Ti, Hf): M(OR)₄, R = R = alkyl or aryl such as ^{t}Bu, ⁱPr, n-Bu, or MR₄ (R = neopentyl, neosilyl, benzyl);
- For group IIIA (Al, Ga, In): M(OR)₃, R = alkyl or aryl such as ^{t}Bu, ⁱPr, n-Bu, or MR₃ (R = alkyl or aryl);
- For M = Zn or Ni: M(OR)₂ R = alkyl or aryl such as ^{t}Bu, ⁱPr, n-Bu, or MR₂ (R = alkyl or n³-allyl).

The grafting temperature in step (b1) can be from 25 °C to 160°C as a function of metal loading, preferably 25° to 80°C. Typically appropriate solvents are hydrocarbon solvents such as pentane, hexane, toluene or xylene, with a generally appropriate reaction duration of from 1 h to 15 h.

In preferred embodiments of the present invention, the amount of auxiliary support precursor compound provides a final quantity of metal or metalloid element M1 in the catalyst material obtained of between 0.10 and 2.00 % by mass of metal or metalloid element M1 with respect to the total mass of catalyst material, preferably 0.40 to 1.00 %.

In preferred embodiments of the present invention, the temperature in calcining step (b2) is at least 300°C, preferably at least 500°C, the duration of the calcining step being least 1 hour, preferably at least 8 hours.

In preferred embodiments of the present invention, during rehydration step (b3) the calcined support material obtained in step (b2) is subject to at least 10 mbar or vapour pressure of water, and may optionally be heated at a temperature up to 100°C.

In preferred embodiments of the present invention, step (b4), the adjustment of the surface hydroxyl (OH) group level, is carried out under vacuum conditions, with the pressure of less than 10⁻⁴ mbar and temperature of at least 200°C. Preferably, the support material prepared in step (b4) contains at least 0.3 mmol and at most 2.0 mmol OH groups/g of the support material, more preferably at least 0.5 mmol and at most 1.3 mmol OH groups/g of the support material.

In grafting step (c) of the invention, the support material obtained in step (b4), having a controlled concentration of hydroxyl groups (OH), is reacted with a grafting reagent, the latter being a precursor compound containing a metal atom M2.

In preferred embodiments of the present invention, the precursor compound containing a metal atom M2 used in step (c) is:
(P1) a compound containing at least one alkoxy or phenoxy group bound though its oxygen atom to a metal element from Group 5 (V, Nb, Ta) or Group 6 (Cr, Mo, W);
(P2) a compound containing at least one hydrocarbon group bound though a carbon atom to a metal element from Group 5 (V, Nb, Ta) or Group 6 (Cr, Mo, W); or
(P3) a compound containing at least one hydrocarbon group bound though a carbon atom to a metal element which is copper (Cu).

In preferred embodiments of the present invention, said compound (P1) containing at least one alkoxy or phenoxy group bound though its oxygen atom to a metal element from Group 5 (V, Nb, Ta) or Group 6 (Cr, Mo, W) is at least one compound selected from the group consisting of: [Nb(OEt)₅]₂; Nb(OAr)₅ where Ar is the 1,3,5-trimethylphenyl (CH₃)₃C₆H₂- group; [W=O(OEt)₄]₂; [V(=O)(OEt)₃]₂; [V(=O)(OⁱPr)₃]; and [Ta(OEt)₅]₂.

In preferred embodiments of the present invention, said compound (P2) containing at least one hydrocarbon group bound though a carbon atom to a metal element from Group 5 (V, Nb, Ta) or Group 6 (Cr, Mo, W) is at least one compound selected from the group consisting of: W≡C^{t}Bu(CH₂^{t}Bu)₃; and Mo(O)₂Mesityl₂.

In preferred embodiments of the present invention, said compound (P3) containing at least one hydrocarbon group bound though a carbon atom to a metal element which is copper (Cu) is [Cu₅(Mes)₅].

In another preferred variant of the present invention, the precursor compound containing a metal atom M2 has two transition metal atoms M2 directly bonded to one another or linked through one or more oxygen atoms. Advantageously, the transition metal atoms of the precursor containing two transition metal atoms M2 may be identical. In this variant of the present invention, the transition metal atoms M2 of the precursor containing two transition metal atoms M2 are bonded to oxygen atoms, to nitrogen atoms and/or to one or more of the following types of groups, each of which may be substituted or unsubstituted: alkyl, aryl, alkoxy, phenoxy. In preferred embodiments of the present invention, the precursor containing two transition metal atoms M2 is selected from the group consisting of: [(^{t}BuCH₂)₃W=O]₂(µ-O); [^{t}BuO₃W=O]₂(µ-O); (^{t}BuO)₃W≡W(^{t}BuO)₃.

In preferred embodiments of the present invention, the precursor compound containing a metal atom M2 is a precursor compound containing tungsten (W).

Concerning the activation (calcination) process of step (d), the activation process may be carried out at temperatures from 200 °C - 700 °C, preferably between 300 °C and 500 °C. Calcination may appropriately be carried out in an oxygen-containing atmosphere, such as dry air. Typical reaction conditions will appropriately be 16 hours under a flow of dry air at 500°C.

In preferred embodiments of the invention, the process is carried out such that the compound obtained in step (d) has at least 0.1 wt% and at most 5.0 wt%, preferably at least 0.5 wt% and at most 2.0 wt%, of transition metal element M2 derived from the precursor as may be determined in elemental analysis of the material obtained in step (d).

In preferred embodiments of the invention, the process is carried out such that the compound obtained after calcining step (d) has at least 0.1 wt% and at most 5.0 wt%, preferably at least 0.5 wt% and at most 2.0 wt%, of transition metal element derived from the precursor containing metal element M2, in elemental analysis of the compound obtained after calcining step (d).

Transition metal atoms M2 derived from the precursors used in the present invention, and which may be identified in elemental analysis of the material obtained after step (c) or (d) of the process of the present invention, may be chosen from the group consisting of: W, Mo, Cr, Ta, Nb, V, Cu. Metals of Group 6 (W, Mo, Cr) and group 5 (Ta, Nb, V) are preferred, and tungsten (W) is particularly preferred.

In preferred embodiments of the present invention, Group 5 or Group 6 metals are used as transition metal atoms M2, which are not known as good active sites for NH₃-SCR when incorporated into zeolite materials. Although metals from these groups may have been used as NH₃-SCR catalysts in single form such as V₂O₅, it was not expected that they would show high NH₃-SCR performance when dispersed over other oxides as support materials. It is therefore considered by the present inventors that it was not easy to predict that the proposed combinations of the metals and support materials in the present invention would lead to significantly improved NH₃-SCR performance, or that atomic scale dispersion of metals over oxides would significantly improve NH₃-SCR performance.

Catalyst materials of the present invention can interact with gas reactants in a catalytic process. In certain embodiments the catalyst materials may be applied to an inert substrate such as a metal plate, corrugated metal plate, or honeycomb. Alternatively, the catalyst material may be combined with other solids such as fillers and binders in order to provide an extrudable paste that may be transformed into a porous structure such as a honeycomb.

A catalytic converter based on catalyst materials of the present invention may appropriately include the catalyst material disposed on a supporting element such that passages are made available for the passage of exhaust gases, and the supported catalyst material may appropriately be housed in a metal casing. The metal casing is generally connected with one or more inlets such as pipes for transferring exhaust gases towards the catalyst material.

In order to function in NH₃-SCR catalysis, the catalytic converter is appropriately connected with a source of ammonia in order for the latter to come into contact with exhaust gas. The ammonia can be provided as anhydrous ammonia, aqueous ammonia, urea, ammonium carbonate, ammonium formate, or ammonium carbamate. In some embodiments, an ammonia storage tank is used to contain the ammonia source.

An SCR system can be integrated into various systems that require NOx reduction. Applications include engine systems of a passenger vehicle, truck, utility boiler, industrial boiler, solid waste boiler, ship, locomotive, tunnel boring machine, submarine, construction equipment, gas turbine, power plant, airplane, lawnmower, or chainsaw. Catalytic reduction of NOx using catalyst materials according to the present invention is therefore of general interest in situations where fossil fuels are used for power generation, not just for transportation but also in power generation devices, and domestic appliances using fossil fuels.

Within the practice of the present invention, it may be envisaged to combine any features or embodiments which have hereinabove been separately set out and indicated to be advantageous, preferable, appropriate or otherwise generally applicable in the practice of the invention. The present description should be considered to include all such combinations of features or embodiments described herein unless such combinations are said herein to be mutually exclusive or are clearly understood in context to be mutually exclusive.

### Experimental section - Examples

The following experimental section illustrates experimentally the practice of the present invention, but the scope of the invention is not to be considered to be limited to the specific examples that follow.

### First step (synthesis Example) : Preparation of Si(OEt)₄/CeO₂ through SOMC approach

A mixture CeO₂₍₂₀₀₎ (4 g) and a desired amount of Si(OEt)₄ (184.6 mg) was stirred at 25 °C in toluene (20 ml) for 12 h. After filtration, the solid [Si(OEt)₄]-CeO₂₋₍₂₀₀₎ was dried at 60 °C under vacuum (10⁻⁵ mbar).

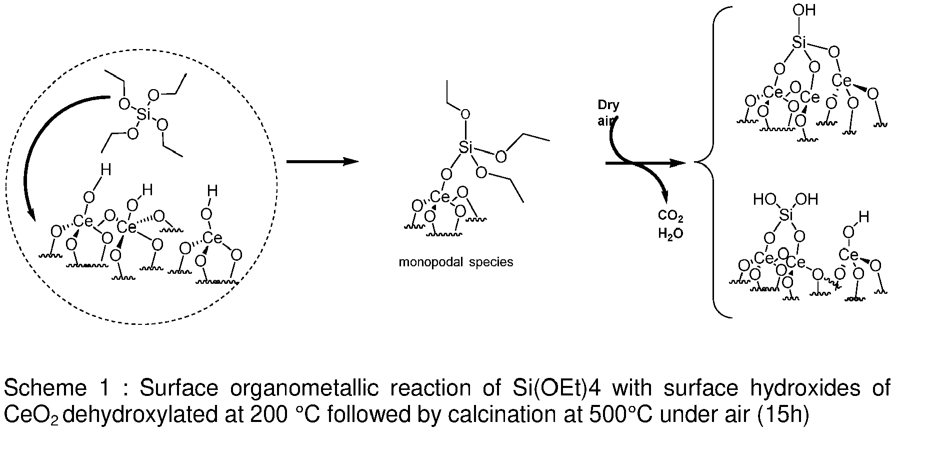

The grafting reaction of Si(OEt)₄ on ceria at room temperature to form [Si(OEt)₄]-CeO₂₋₍₂₀₀₎ is monitored by DRIFT spectroscopy. After the grafting reaction and the removal of the excess complex, the bands between 3400 and 3700 cm⁻¹ attributed to different vibration modes of v(CeO-H) were disturbed. The band at 3747 cm⁻¹ completely disappeared, and others were shifted. New bands in the 3000-2800 cm⁻¹ range were observed - these peaks are characteristic of CH stretching vibrations of the chemisorbed ligands on the surface.

After calcination at 500 °C under dry air (15 h), bands between 3747 cm⁻¹ attributed to vibration mode of v(SiO-H) are observed.

The BET surface area measured for the resulting material was found to be ca. 186 ± 9 m²/g, close to the one found for the neat ceria calcined under the same conditions, which was ca. 200 ± 10 m²/g. This would mean that the crystal structure of ceria support is preserved and the grafting as well as the calcination process induce no particle sintering.

In addition to creating an additional anchoring site, the material {SiOH}-CeO₂ obtained in the first step (Scheme 1) was rehydrated by addition of vapor pressure of water. The sample was heated at 100 °C for 6 h in the presence of the moisture. Afterwards, the material was dehydroxylated under high vacuum (10⁻⁵ Torr) at 200 °C, and the excess as well as the physisorbed water were removed. For the preparation of the support {SiOH}-CeO₂ with high Silicon loading (0.94 wt%), similar experiment has been carried out by grafting of Si(OEt)₄ on ceria at 120°C in xylene.

### Catalyst materials according to the invention: Grafting of [W(=O)(OEt)₄]-on {SiOH}-CeO₂ through SOMC approach : two catalysts are prepared (WOx-SiOx/CeO₂) (Si 0.46; W 3.8) or (WOx-SiOx/CeO₂) (Si 0.94; W 3.8)

A mixture of [W(=O)(OEt)₄] (150 mg) and {SiOH}-CeO₂ (1.8 g of acidic support Si loading of 0.46 wt%) was stirred in toluene for 4 h, at room temperature. The [W(=O)(OEt)₄]/{SiOH}-CeO₂ material was washed three times with pentane via filtration-condensation cycles. After evaporation of the solvent, the resulting solid was dried under vacuum (10⁻⁵ Torr).

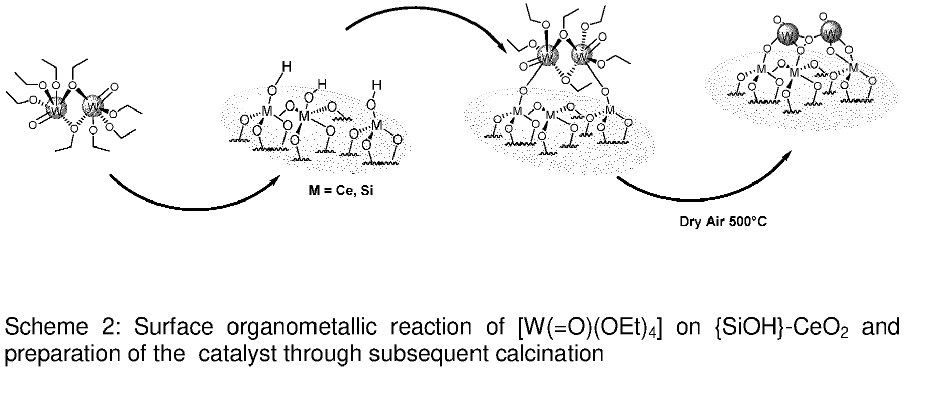

The grafting reaction (Scheme 2) was monitored by DRIFT spectroscopy. After surface functionalization of the ceria surface by [W(=O)(OEt)₄], the bands between 3500 and 3700 cm⁻¹ attributed to different vibration modes of surface v(O-H) are disturbed. Indeed, the DRIFT spectrum of the resulting material shows a partial consumption of the other OH vibration bands, located between 3747 and 3600 cm⁻¹, while a new broad band appears, resulting from the interaction of some OH groups with tungsten alkoxide ligands. The new bands appearing in the 3100-2850 cm⁻¹ and 1620-1400 cm⁻¹ ranges are characteristic of aliphatic ν(C-H), and δ(C-H) vibrations of the alkyl ligands coordinated to surface tungsten.

The material of [W(=O)(OEt)₄]/{SiOH}-CeO₂ was calcined using a glass reactor under continuous flow of dry air at 500 °C for 16 h leading to catalyst (Si 0.46, W 3.8). The recovered material prior to catalytic test was characterized. The DRIFT analyses showed the complete disappearance of CH group of the perhydrocarbyl moieties and the appearance of new signals around 3747 to 3500 cm⁻¹ attributed to hydroxyl group (Si-OH, and Ce-OH).

The surface area measurement of the WOx-SiOx/CeO₂₋₂₀₀ (W 3.8 %; Si 0.46 %) based catalyst indicated a surface of ca. 157 m²/g. It should be noted that the surface area decreased (ca. 20 % loss) by the grafting as well as the different thermal treatment. Nevertheless, the surface area remains relatively high.

A similar experiment was carried out for the grafting of [W(=O)(OEt)₄] on {SiOH}-CeO₂ with high loading of Si (0.9 wt%) leading to the material WOx-SiOx/CeO₂₋₂₀₀ (W 3.8 % and Si 0.9 %).

### Comparative catalyst material without metal M1 from auxiliary support precursor compound: Grafting of [W(=O)(OEt)₄]-on CeO₂ through SOMC approach : catalyst (WOx /CeO₂) (W 3.8)

A mixture of [W(=O)(OEt)₄] (300 mg) and CeO₂₋₂₀₀ (1.7 g) was stirred in toluene for 4 h, at room temperature. The [W(=O)(OEt)₄]/CeO₂ material was washed three times with pentane via filtration-condensation cycles. After evaporation of the solvent, the resulting solid was dried under vacuum (10⁻⁵ Torr).

### Catalytic activity test conditions

Pellet samples of approximate 33 mg were prepared under 1 ton pressure and put into a quartz reactor (diameter 4.5 mm). A mixture of gas consisting of NO 300 ppm, NH₃, 350 ppm, O₂ 10%, H₂O, 3%, CO₂ 10%, He (balance), was sent through a catalytic bed at the rate of 300 mL/min. The reactor was heated from room temperature to 600°C with a heating rate of 10 °C/ min. The system was kept at 600°C for 10 min before cooling down to room temperature. Gas composition at the outlet was monitored during the heating up and cooling down by a combination of FTIR, MS and chemiluminescence.

## Claims

1. Process for preparing a catalyst material, comprising the steps of:
(a) providing a support material having surface hydroxyl (OH) groups, wherein the support material is ceria (CeO₂) or a combination of ceria and zirconia (ZrO₂);
(b1) reacting the support material having surface hydroxyl (OH) groups of step (a) with at least one auxiliary support precursor compound containing a metal or metalloid element M1 selected from the group consisting of: silicon (Si), the group IVB elements Ti, Zr and Hf, the group IIIA elements Al, Ga, In, zinc (Zn) and nickel (Ni);
(b2) removing organic parts of the auxiliary support precursor compound grafted in step (b1) by calcination to provide a calcined support material bearing metal element M1;
(b3) rehydrating the calcined support material obtained in step (b2);
(b4) adjusting the surface hydroxyl (OH) group level of the rehydrated calcined support material obtained in step (b3);
(c) reacting the support material having surface hydroxyl (OH) groups of step (b4) with at least one precursor containing a metal atom M2 wherein M2 is selected from the group consisting of: W, Mo, Cr, Ta, Nb, V and Cu;
(d) calcining the product obtained in step (c) in order to provide a catalyst material containing cerium and optionally zirconium, and containing at least one metal or metalloid element M1, and at least one metal element M2.

2. Process according to claim 1, wherein the auxiliary support precursor compound contains alkoxide groups.

3. Process according to claim 1 or 2, wherein the auxiliary support precursor compound is Si(OEt)₄.

4. Process according to any of claims 1 to 3, wherein the amount of auxiliary support precursor compound provides a final quantity of metal or metalloid element M1 in the catalyst material obtained of between 0.10 and 2.00 % by mass of metal or metalloid element M1 with respect to the total mass of catalyst material, preferably 0.40 to 1.00 %.

5. Process according to any of claims 1 to 4, wherein the support material provided in step (a) contains at least 0.3 mmol and at most 2.0 mmol OH groups/g of the support material, preferably at least 0.5 mmol and at most 1.3 mmol OH groups/g of the support material.

6. Process according to any of claims 1 to 5, wherein the temperature in calcining step (b2) is at least 300°C, preferably at least 500°C, the duration of the calcining step being least 1 hour, preferably at least 8 hours.

7. Process according to any of claims 1 to 6, wherein during rehydration step (b3) the calcined support material obtained in step (b2) is subject to at least 10 mbar or vapour pressure of water, and may optionally be heated at a temperature up to 100°C.

8. Process according to any of claims 1 to 7, wherein step (b4), the adjustment of the surface hydroxyl (OH) group level, is carried out under vacuum conditions, with the pressure of less than 10⁻⁴ mbar and temperature of at least 200°C.

9. Process according to any of claims 1 to 8, wherein the support material prepared in step (b4) contains at least 0.3 mmol and at most 2.0 mmol OH groups/g of the support material, preferably at least 0.5 mmol and at most 1.3 mmol OH groups/g of the support material.

10. Process according to any of claims 1 to 9, wherein the precursor compound containing a metal atom M2 used in step (c) is:
(P1) a compound containing at least one alkoxy or phenoxy group bound though its oxygen atom to a metal element from Group 5 (V, Nb, Ta) or Group 6 (Cr, Mo, W);
(P2) a compound containing at least one hydrocarbon group bound though a carbon atom to a metal element from Group 5 (V, Nb, Ta) or Group 6 (Cr, Mo, W); or
(P3) a compound containing at least one hydrocarbon group bound though a carbon atom to a metal element which is copper (Cu).

11. Process according to claim 10, wherein the compound (P1) containing at least one alkoxy or phenoxy group bound though its oxygen atom to a metal element from Group 5 (V, Nb, Ta) or Group 6 (Cr, Mo, W) is at least one compound selected from the group consisting of: [Nb(OEt)₅]₂; Nb(OAr)₅ where Ar is the 1,3,5-trimethylphenyl (CH₃)₃C₆H₂- group; [W=O(OEt)₄]₂; [V(=O)(OEt)₃]₂; [V(=O)(OⁱPr)₃]; and [Ta(OEt)₅]₂.

12. Process according to claim 10, wherein the compound (P2) containing at least one hydrocarbon group bound though a carbon atom to a metal element from Group 5 (V, Nb, Ta) or Group 6 (Cr, Mo, W) is at least one compound selected from the group consisting of: W≡C^{t}Bu(CH₂^{t}Bu)₃; and Mo(O)₂Mesityl₂.

13. Process according to claim 10, wherein the compound (P3) containing at least one hydrocarbon group bound though a carbon atom to a metal element which is copper (Cu) is [Cu₅(Mes)₅].

14. Process according to any of claims 1 to 13, wherein the precursor compound containing a metal atom M2 has two transition metal atoms M2 directly bonded to one another or linked through one or more oxygen atoms.

15. Process according to claim 14, wherein the transition metal atoms of the precursor containing two transition metal atoms M2 are identical.

16. Process according to claim 14 or 15, wherein the transition metal atoms M2 of the precursor containing two transition metal atoms M2 are bonded to oxygen atoms, to nitrogen atoms and/or to one or more of the following types of groups, each of which may be substituted or unsubstituted: alkyl, aryl, alkoxy, phenoxy.

17. Process according to any of claims 14 to 16, wherein the precursor containing two transition metal atoms M2 is selected from the group consisting of: [(^{t}BuCH₂)₃W=O]₂(µ-O); [^{t}BuO₃W=O]₂(µ-O); (^{t}BuO)₃W≡W(^{t}BuO)₃.

18. Process according to any of claims 1 to 17, wherein the precursor compound containing a metal atom M2 is a precursor compound containing tungsten (W).

19. Catalyst material as may be obtained by the process according to any of claims 1 to 18.

20. Use of the catalyst material according to claim 19 as an ammonia selective catalytic reduction (NH₃-SCR) catalyst for nitrogen oxides (NOx) reduction.

21. Use according to claim 20, where NH₃-SCR catalytic reduction is carried out at a temperature of at least 400°C and at most 550°C.
